Europäisches Patentamt

European Patent Office

Office européen des brevets

(11) Veröffentlichungsnummer: **0 195 419 B1**

# EUROPÄISCHE PATENTSCHRIFT

(45) Veröffentlichungstag der Patentschrift: **03.07.91**

(21) Anmeldenummer: **86103676.2**

(22) Anmeldetag: **18.03.86**

(51) Int. Cl.⁵: **C09D 161/10**, C08L 33/06,
C08L 25/14, C08L 27/06,
C23F 15/00

(54) **Physikalisch trocknende Korrosionsschutzfarben und Verfahren zu deren Herstellung.**

(30) Priorität: **22.03.85 DE 3510362**

(43) Veröffentlichungstag der Anmeldung:
**24.09.86 Patentblatt 86/39**

(45) Bekanntmachung des Hinweises auf die
Patenterteilung:
**03.07.91 Patentblatt 91/27**

(84) Benannte Vertragsstaaten:
**AT BE CH DE FR GB LI NL**

(56) Entgegenhaltungen:
**EP-A- 0 004 643**
**DE-A- 1 178 161**
**FR-A- 2 097 843**

(73) Patentinhaber: **BASF Aktiengesellschaft**
**Carl-Bosch-Strasse 38**
**W-6700 Ludwigshafen(DE)**

(72) Erfinder: **Neubert, Gerhard, Dr.**
**Panoramastrasse 11**
**W-6719 Battenberg(DE)**
Erfinder: **Bobar, Georg**
**Friedelsheimer Strasse 12**
**W-6702 Bad Duerkheim(DE)**
Erfinder: **Haertl, Hanns-Dietmar, Dr.**
**Ketscher Strasse 36**
**W-6835 Bruehl(DE)**
Erfinder: **Hahn, Herbert**
**Westring 5**
**W-6701 Maxdorf(DE)**
Erfinder: **Fischer, Gerhard**
**Am Herrgottsacker 11**
**W-6716 Dirmstein(DE)**

**Beschreibung**

Die Erfindung betrifft physikalisch trocknende Korrosionsschutzfarben auf der Basis von in organischen Lösungsmitteln löslichen Polymerisatbindemitteln und Alkylphenol/Formaldehyd-Kondensationsprodukten sowie ein Verfahren zu deren Herstellung.

Der Korrosionsschutz von Metallen, wie insbesondere von Eisen und Stahl, mit Korrosionsschutzfarben auf der Basis von Polymerisatbindemitteln und gegebenenfalls Korrosionsschutzpigmenten ist oft unbefriedigend. Vor allem nach langzeitiger Beanspruchung durch Salzwasser oder Salzsprühnebel treten Korrosionserscheinungen wie Blasenbildung, Haftungsverlust und Unterrostung auf. Es hat sich gezeigt, daß der Korrosionsschutz entscheidend verbessert werden kann, wenn die Korrosionsschutzpigmente teilweise oder vollständig durch Aluminiumbronze ersetzt werden. Aluminiumbronze ist jedoch ein sehr kostenaufwendiges Pigment. Es verursacht oft Probleme bei der Herstellung und Lagerung der Farben. Mit Feuchtigkeit und sauren Komponenten der Farben können Reaktionen auftreten, die die Instabilität der Farben zur Folge haben. Außerdem werden Anstriche auf dieser Basis durch die Säuren der Industrieatmosphäre angegriffen.

Weiterhin ist bekannt, zur Herstellung von Korrosionsschutzfarben Polymerisatharze mit Hartharzen zu kombinieren, wie z.B. mit Kohlenwasserstoffharzen, Ketonharzen, Cumaronharzen, kolophoniummodifizierten Harzen, Phenolharzen, bituminösen Stoffen, und zur Verbesserung des Korrosionsschutzes Korrosionsschutzpigmente wie z.B. Zinkchromat, Bleimennige, Zinkphosphat, Zinkborat, Molybdat- und Ferritpigmente mitzuverwenden. Die auf diese Weise erzielten Eigenschaften der Korrosionsschutzanstriche entsprechen in der Regel ungefähr den nach dem Mischungsverhältnis zu erwartenden Eigenschaften.

Ebenso ist bekannt, zur Verbesserung des Korrosionsschutzes Polymerisatbindemittel mit oxidativ trocknenden Harzen, wie z.B. mit Fettsäuren modifizierten Alkydharzen, zu modifizieren.

Auch in diesem Fall entsprechen die erzielten Eigenschaften etwa den nach dem Mischungsverhältnis zu erwartenden Eigenschaften. Derartige Kombinationen lassen sich aber nicht für alle Anwendungsgebiete des Korrosionsschutzes einsetzen. Z.B. sind Anstrichstoffe auf der Basis solcher Kombinationen für den Schutz von verzinktem Stahl oder für Unterwasseranstriche ungeeignet. Außerdem haben derartige Anstrichstoffe die für oxidativ trocknende Farben bekannten Nachteile, wie z.B. der Hautbildung bei Einwirkung des Luftsauerstoffs und der schlechten Durchtrocknung in dicken Schichten.

Weiterhin ist in DE-A-1 178 161 ein Überzugsmittel auf der Basis von Terpolymeren und einem Phenolformaldehydharz beschrieben. Aufgrund der fehlenden Alkylsubstitution der Phenolkomponente triff bei diesen Bindemitteln während der Trocknung eine räumliche Vernetzung auf, die zu einer Haut- bzw. Blasenbildung und damit zu einem schlecteren Korrosionsschutz führen kann.

Aufgabe der vorliegenden Erfindung war es, physikalisch trocknende Korrosionsschutzfarben mit besonders gutem Korrosionsschutz aufzufinden, zu deren Herstellung keine Aluminiumbronze und keine oxidativ vernetzenden Bindemittel mitverwendet werden müssen, die sich auch für die Herstellung schnelltrocknender dickschichtiger Anstriche eignen.

Gegenstand der vorliegenden Erfindung sind physikalisch trocknende Korrosionsschutzfarben auf der Basis von in organischen Lösemitteln löslichen Polymerisatbindemitteln, weiteren Lackharzen, organischen Lösemitteln und/oder Wasser sowie gegebenenfalls Korrosionsschutzpigmenten, weiteren Pigmenten, Weichmachern, Lackhilfsstoffen und Füllstoffen, die dadurch gekennzeichnet sind, daß sie als Bindemittel ein Gemisch aus

(a) 25 bis 83 Gew.-% mindestens eines in Testbenzin, Aromaten, Carbonsäureestern oder deren Mischungen mit Alkoholen löslichen Copolymerisats von Vinylaromaten mit (Meth)acrylsäureestern oder Copolymerisats des Vinylchlorids mit Vinylisobutylether, Vinylacetat, Vinylpropionat, Maleinsäuremono- oder Maleinsäurediestern mit K-Werten nach DIN 53726 zwischen 25 und 80, und

(b) 75 bis 17 Gew.% eines Alkylphenol/Formaldehyd-Kondensationsproduktes mit 6 bis 12 Kohlenstoffatome enthaltenden Alkylresten,

mit der Maßgabe, daß die Summe der unter (a) und (b) genannten Prozentzahlen gleich 100 ist, enthalten.

Bevorzugt ist ein Zusatz von 10 bis 150 Gew.%, bezogen auf Bindemittelgemisch (a) + (b), von Calciumferrit.

Gegenstand der vorliegenden Erfindung ist außerdem ein Verfahren zur Herstellung dieser Korrosionsschutzfarben, wobei das Alkylphenol/Formaldehyd-Kondensationsprodukt (b) zunächst in organischen Lösemitteln und/oder Weichmachern gelöst wird, in dieser Lösung die Pigmente und gegebenenfalls Füllstoffe dispergiert werden und anschließend die erhaltene Suspension mit dem in Wasser und/oder organischen Lösemitteln gelösten oder dispergierten Polymerisat (a) vermischt wird.

Gegenstand der vorliegenden Erfindung ist auch die Verwendung dieser Korrosionsschutzfarben zum Beschichten von gegebenenfalls chemisch vorbehandelten Eisen- oder Stahloberflächen.

Der überraschende Vorteil der erfindungsgemäßen physikalisch trocknenden Korrosionsschutzfarben ist durch den entscheidend verbesserten Korrosionsschutz, insbesondere bei Salzwasser- oder Salzsprühbelastung, verglichen mit herkömmlich rezeptierten Korrosionsschutzfarben, gegeben, bei denen andere Bindemittelkombinationen angewendet werden. Das erfindungsgemäße Verfahren ermöglicht, selbst bei höchsten Ansprüchen an den Korrosionsschutz, wie z.B. beim Industriekorrosionsschutz mit Dickschichtanstrichen oder bei Schiffsbodenfarben, auf die Mitverwendung von Aluminiumbronze zu verzichten. Auf oxidativ trocknende Harze, die bisher im Industriekorrosionsschutz zur Verbesserung des Korrosionsschutzes in Anstrichstoffen auf Polymerisatbasis mitverwendet werden, kann bei Verwendung der erfindungsgemäßen Korrosionsschutzfarben unter gleichzeitiger Verbesserung der Schutzeigenschaften verzichtet werden.

Ein wesentlicher Fortschritt der erfindungsgemäßen Korrosionsschutzfarben besteht außerdem darin, daß Polymerisatbindemittel, die bisher im Korrosionsschutz nur unbefriedigende Ergebnisse erbrachten oder die mit handelsüblichen Alkydharzen nicht kombinierbar waren, wie z.B. Styrol- und (Meth)-acrylsäureestercopolymere, jetzt ebenfalls dem qualitativ hochstehenden Korrosionsschutz zugänglich werden.

Zu den Aufbaukomponenten der erfindungsgemäßen Korrosionsschutzfarben ist im einzelnen folgendes auszuführen:

(a) Als in Testbenzin, Aromaten, Carbonsäureestern oder deren Mischungen mit Alkoholen lösliche Polymerisatbindemittel eignen sich die für die Herstellung von Korrosionsschutzfarben üblichen Polymerisate. Der K-Wert dieser Polymerisate (a) liegt im allgemeinen zwischen 25 und 80, vorzugsweise zwischen 30 und 60, gemessen nach DIN 53 726 (1 %ig in Tetrahydrofuran). Beispiele hierfür sind die handelsüblichen Copolymerisate des Vinylchlorids, wie beispielsweise Copolymerisate des Vinylchlorids mit Vinylisobutylether, Vinylacetat, Vinylpropionat oder mit Maleinsäuremono- und -diestern, die handelsüblichen Copolymerisate von Vinylaromaten mit (Meth)acrylsäureestern, wie beispielsweise Copolymerisate von Styrol oder Vinyltoluol mit (Meth)acrylsäureestern. Diese Copolymerisate weisen im allgemeinen Erweichungspunkte über 80, vorzugsweise über 100 auf. Aber auch andere zur Herstellung von Korrosionsschutzfarben gängige Polymerisatbindemittel können für das erfindungsgemäße Verfahren eingesetzt werden. Beispiele für solche Bindemittel sind Chlorkautschuk, chloriertes Polypropylen und Cyclokautschuk.

Bevorzugte Polymerisatbindemittel sind Vinylchlorid-Vinylisobutylether-Copolymere und Styrol/Acrylsäureester-Copolymere.

(b) Als Alkylphenol/Formaldehyd-Kondensationsprodukte kommen die nach bekannten Verfahren hergestellten Kondensationsprodukte der 6 bis 12, bevorzugt 8 bis 10 Kohlenstoffatome im Alkylrest enthaltenden Alkylphenole mit Formaldehyd in Frage. Diese können als Resole durch Reaktion in alkalischem Milieu hergestellt werden oder aber auch durch Kondensationsreaktion in saurem Milieu als Novolake. In begrenzten Mengen von etwa bis zu 30 Gew.% der jeweiligen Reaktionskomponenten können auch andere Phenole oder andere Aldehyde zur Reaktion miteingesetzt werden. Bevorzugt sind jedoch die unmodifizierten Alkylphenol-Formaldehyd-Harze. Die Alkylkette kann geradkettig oder vorzugsweise verzweigt sein. Bevorzugte Phenolharze sind die Novolake.

Das Mengenverhältnis der Komponenten (a) zu (b) beträgt 83:17 bis 25:75, vorzugsweise 78:22 bis 40:60, insbesondere 67:33 bis 50:50.

Zur Erzielung eines besonders guten Korrosionsschutzes werden Korrosionsschutzpigmente in Mengen von 10 bis 150 Gew.%, bezogen auf die Gesamtmenge des Bindemittelgemisches (a) + (b) mitverwendet. Bevorzugtes Korrosionsschutzpigment ist dabei handelsübliches Calciumferrit. Bevorzugte Mengen sind 30 bis 100 Gew.%, insbesondere 40 bis 80 Gew.%, bezogen auf Bindemittelgemisch (a) + (b). Andere gängige Korrosionsschutzpigmente, wie z.B. auf der Basis von Zinkphosphat, Zinkborat, Zinkferrit oder Zinkchromat, ergeben, anstelle von Calciumferrit eingesetzt, wesentlich schlechtere Ergebnisse bei Korrosionsschutzprüfungen. Sie können jedoch in geringen Anteilen neben Calciumferrit mitverwendet werden.

Außer den genannten Komponenten können die erfindungsgemäßen Korrosionsschutzfarben weitere übliche Lackrohstoffe, Lackhilfsstoffe, Pigmente, Füllstoffe und Weichmacher enthalten. Beispiele für Weichmacher sind Chlorparaffine und Phthalsäureester. Beispiele für Pigmente sind Zinkweiß, Titandioxid und Chromoxidgrün. Schwerspat, Eisenglimmer, Calcite und Talkum eignen sich als Füllstoffe. Außerdem können Verdickungsmittel, Thixotropiermittel bzw. Antiabsetzmittel mitverwendet werden.

Zum Lösen und Verteilen der Bindemittel. Pigmente und Füllstoffe können übliche flüchtige Lösemittel wie Testbenzin, Aromaten, Carbonsäureester, Alkohole, Glykolether, sowie Weichmacher verwendet werden.

In einer besonders vorteilhaften Ausführungsform des erfindungsgemäßen Verfahrens wird die Lösung des Alkylphenolharzes (b) in einem organischen, vorzugsweise mit Wasser mischbaren Lösemittel, wie insbesondere n-Propanol und/oder Butylglykol in einer 1. Stufe zum Dispergieren eines Teils oder bevorzugt aller Pigmente und Füllstoffe eingesetzt und die Pigmentsuspension in einer 2. Stufe mit dem Polymerisatbindemittel (a) in Form einer wäßrigen, gegebenenfalls lösemittelhaltigen Lösung oder Dispersion vermischt.

Der Vorteil dieser Verfahrensweise besteht darin, daß sich damit auch der Korrosionsschutz auf der Basis wäßriger Polymerisatbindemittel im Vergleich zu wäßrigen Farben, bei denen die Pigmente nach bekannten Verfahren, beispielsweise mit Hilfe wäßriger Pigmentverteiler, eingearbeitet werden, entscheidend verbessern läßt.

Die erfindungsgemäßen Korrosionsschutzfarben eignen sich besonders als physikalisch trocknende - gegebenenfalls durch Wärme beschleunigt -Korrosionsschutzanstriche auf gegebenenfalls chemisch (z.B. durch Phosphatierung) vorbehandelten Metallen, insbesondere Eisen und Stahl, beispielsweise im Industriekorrosionsschutz und als Schiffsfarben.

Die folgenden Beispiele sollen den Gegenstand der Erfindung näher erläutern, ohne diesen einzuschränken. Die in den Beispielen angegebenen Teile sind Gewichtsteile.

In den folgenden Beispielen werden zur Herstellung der Korrosionsschutzfarben die einzelnen Bestandteile in der angegebenen Reihenfolge nacheinander gelöst bzw. in der Lösung in bekannter Weise dispergiert.

## Beispiel 1

```
230 Teile  Aromaten mit Siedebereich 140 bis 180°C
 75 Teile  Vinylchlorid/Vinylisobutylether-Copolymerisat (Chlorgehalt ca.
           42 %; K-Wert, gemessen 1 %ig in Tetrahydrofuran: 35)
 25 Teile  Alkylphenolharz (Isooctylphenol-Formaldehyd-Resol-Harz),
           Erweichungspunkt (Ring-Kugel DIN 52 011) ca. 95°C, Methylol-
           gruppengehalt ca. 8 Gew.%, z.B. Laropal® LR 8660
 15 Teile  flüssiges Chlorparaffin, niedrigviskos
  2 Teile  Thixotropiermittel auf Basis eines hydrierten Rizinusöl-
           derivates
 60 Teile  Calciumferrit
 60 Teile  Talkum
 30 Teile  Schwerspat
```

## Beispiel 2

230 Teile Aromaten mit Siedebereich 140 bis 180°C

60 Teile Vinylchlorid/Vinylisobutylether-Copolymerisat (wie Bsp. 1)

40 Teile Alkylphenolharz (Isooctylphenol-Formaldehyd-Novolak),
Erweichungspunkt ca. 100°C, z.B. Laropal® LR 8661

20 Teile flüchtiges Chlorparaffin, niedrigviskos

2 Teile Thixotropiermittel

60 Teile Calciumferrit

60 Teile Talkum

30 Teile Schwerspat

10 Teile Zinkweiß

## Beispiel 3

180 Teile Xylol

20 Teile Butanol

65 Teile Copolymerisat aus Styrol/Isobutylacrylat/Maleinsäuremonobutyl-
ester (SZ: 28; K-Wert 40, gemessen 1 %ig in Tetrahydrofuran)

35 Teile Laropal LR 8660

33 Teile Chlorparaffin

2 Teile Thixotropiermittel

2 Teile Triethylamin

60 Teile Calciumferrit

60 Teile Talkum

30 Teile Schwerspat

## Beispiel 4

180 Teile Testbenzin

60 Teile Styrol/Acrylsäureester-Copolymerisat (z.B. Acronal® 260 F)

40 Teile Alkylphenolharz Laropal LR 8660

15 Teile Chlorparaffin

2 Teile Thixotropiermittel

60 Teile Calciumferrit

60 Teile Talkum

30 Teile Schwerspat

10 Teile Zinkweiß

Die Korrosionsschutzfarben werden mit einer Trockenschichtdicke von ca. 0.070 mm auf entfettete Eisenbleche aufgetragen. Die Anstriche werden 1 Woche bei Raumtemperatur und anschließend 1 Tag bei 40°C getrocknet. Die mit einem 10 cm langen Schnitt versehenen Anstriche werden 500 Stunden nach DIN 50 021 im Salzsprühtest beansprucht.

Alle Anstriche weisen nach dieser Beanspruchung keine Schäden auf.

Vergleichsversuche

5

In den Farben der Beispiele 1 bis 3 wird das Alkylphenolharz durch eine gleiche Menge des in der Farbe enthaltenen Polymerisatharzes ausgetauscht. In weiteren Versuchen wird Calciumferrit durch Zinkchromat als Korrosionsschutzpigment ersetzt. Die so erhaltenen Farben werden in analoger Weise geprüft. Diese Anstriche weisen bereits nach 200 Stunden Prüfdauer im Salzsprühtest größere Schäden auf, wie Blasenbildung, Haftungsverlust und Unterrostung auf dem Eisenblech.

Beispiel 5

40 Teile Alkylphenolharz Laropal LR 8661 werden in 15 Teilen Butylglykol, 5 Teilen n-Propanol und 10 Teilen niedrigviskosem Chlorparaffin gelöst. In dieser Lösung werden 60 Teile Calciumferrit und 40 Teile Schwerspat mit Hilfe eines Dissolvers dispergiert. Die Pigmentsuspension wird mit 240 Teilen einer wäßrigen Lösung aus 60 Teilen eines in üblicher Weise hergestellten Copolymerisats aus 39 Teilen Styrol, 50 Teilen Butylacrylat und 11 Teilen Acrylsäure in 9 Teilen konzentriertem Ammoniak, 18 Teilen Butylglykol und 162 Teilen Wasser vermischt.

Die Farbe wird analog zu den Beispielen 1 bis 4 im Salzsprühtest geprüft.

Die Prüfergebnisse fallen wesentlich besser aus als bei einer analogen Farbe, bei der das Alkylphenolharz durch eine entsprechende Menge des gleichen Polymerisatharzes ersetzt wird und die Pigmente in der Polymerisatlösung dispergiert werden.

**Ansprüche**

1. Physikalisch trocknende Korrosionsschutzfarben auf der Basis von in organischen Lösemitteln löslichen Polymerisatbindemitteln, weiteren Lackharzen, organischen Lösemitteln und/oder Wasser sowie gegebenenfalls Korrosionsschutzpigmenten, weiteren Pigmenten, Weichmachern, Lackhilfsstoffen und Füllstoffen, dadurch gekennzeichnet, daß sie als Bindemittel ein Gemisch aus

(a) 25 bis 83 Gew.-% mindestens eines in Testbenzin, Aromaten, Carbonsäureestern oder deren Mischungen mit Alkoholen löslichen Copolymerisats von Vinylaromaten mit (Meth)acrylsäureestern oder Copolymerisats des Vinylchlorids mit Vinylisobutylether, Vinylacetat, Vinylpropionat, Maleinsäuremono- oder Maleinsäurediestern mit K-Werten nach DIN 53726 zwischen 25 und 80, und

(b) 75 bis 17 Gew.-% eines Alkylphenol/Formaldehyd-Kondensationsproduktes mit 6 bis 12 Kohlenstoffatome enthaltenden Alkylresten,

mit der Maßgabe, daß die Summe der unter (a) und (b) genannten Prozentzahlen gleich 100 ist, enthalten.

2. Korrosionsschutzfarben nach Anspruch 1, dadurch gekennzeichnet, daß sie 10 bis 150 Gew.-%, bezogen auf das Bindemittelgemisch (a) + (b), Calciumferrit enthalten.

3. Korrosionsschutzfarben nach einem der vorhergehenden Ansprüche, dadurch gekennzeichnet, daß sie als Alkylphenol/Formaldehyd-Kondensationsprodukte (b) Novolake enthalten.

4. Verfahren zur Herstellung von Korrosionsschutzfarben nach einem der Ansprüche 1 bis 3, dadurch gekennzeichnet, daß das Alkylphenol/Formaldehyd-Kondensationsprodukt (b) zunächst in organischen Lösemitteln und/oder Weichmachern gelöst wird, in dieser Lösung die Pigmente und gegebenenfalls Füllstoffe dispergiert werden und anschließend die erhaltene Suspension mit dem in Wasser und/oder organischen Lösemittel gelösten oder dispergierten Copolymerisat (a) vermischt wird.

5. Verwendung der Korrosionsschutzfarben nach einem der Ansprüche 1 bis 3 zum Beschichten von gegebenenfalls chemisch vorbehandelten Eisen- oder Stahloberflächen.

**Claims**

1. A physically drying corrosion protection paint based on polymer binders which are soluble in organic solvents, further coating resins, organic solvents and/or water and optionally corrosion protection pigments, further pigments, plasticizers, paint auxiliaries and fillers, wherein the binder comprises a mixture of

(a) from 25 to 83% by weight of at least one copolymer of an aromatic vinyl compound with a (meth)acrylic ester or a vinyl chloride with vinyl isobutyl ether, vinyl acetate, vinyl propionate, a

6

maleic monoester or a maleic diester having a K value, as defined in German Standard Specification DIN 53726, of from 25 to 80 which is soluble in white spirit, aromatics, carboxylic esters or mixtures thereof with alcohols, and

(b) from 75 to 17% by weight of an alkylphenol/formaldehyde condensation product where the alkyl moiety contains from 6 to 12 carbon atoms,

with the proviso that the sum total of the percentages mentioned under (a) and (b) is equal to 100.

2. A corrosion protection paint as claimed in claim 1, containing from 10 to 150% by weight, based on the binder mixture (a) + (b), of calcium ferrite.

3. A corrosion protection paint as claimed in either of the preceding claims, wherein the alkylphenol/formaldehyde condensation product (b) is a novolak.

4. A process for preparing a corrosion protection paint as claimed in any one of claims 1 to 3, which comprises first dissolving the alkylphenol/formaldehyde condensation product (b) in an organic solvent or plasticizer, dispersing the pigments and optionally the fillers in this solution and then mixing the resulting suspension with the copolymer (a) dissolved or dispersed in water and/or an organic solvent.

5. The use of a corrosion protection paint as claimed in any one of claims 1 to 3 for coating untreated or chemically pretreated iron or steel surfaces.

**Revendications**

1. Peintures anticorrosives séchant physiquement, à base de liants polymères solubles dans les solvants organiques, d'autres résines pour vernis, de solvants organiques et/ou d'eau, ainsi le cas échéant que de pigments anticorrosifs, d'autres pigments, de plastifiants, d'adjuvants pour vernis et de charges, caractérisées en ce qu'elles contiennent, en tant que liants, un mélange de

(a) 25 à 83% en poids d'au moins un copolymère de carbures vinylaromatiques avec des esters d'acide (méth)acrylique ou d'au moins un copolymère de chlorure de vinyle avec du vinylisobutyléther, de l'acétate de vinyle, du propionate de vinyle, des mono- ou des diesters d'acide maléique, ledit copolymère ayant une valeur K selon la DIN 53 726 comprise entre 25 et 80 et soluble dans le white-spirit, dans les carbures aromatiques, dans les esters d'acides carboxyliques ou dans leurs mélanges avec des alcools, et de

(b) 75 à 17% en poids d'un produit de condensation alkylphénol/formaldéhyde qui renferme des restes alkyle contenant 6 à 12 atomes de carbone,

étant spécifié que le somme des pourcentages mentionnés en (a) et en (b) est égale à 100.

2. Peintures anticorrosives selon la revendication 1, caractérisées en ce qu'elles contiennent de 10 à 150% en poids, par rapport au mélange de liants (a) + (b), de ferrite de calcium.

3. Peintures anticorrosives selon la revendication 1 ou 2, caractérisées en ce qu'elles contiennent des novolaques en tant que produits de condensation alkylphénol/formaldéhyde (b).

4. Procédé de préparation de peintures anticorrosives selon l'une quelconque des revendications 1 à 3, caractérisé en ce que le produit de condensation alkylphénol/formaldéhyde (b) est d'abord dissous dans des solvants organiques et/ou des plastifiants, les pigments et éventuellement les charges sont mises en dispersion dans cette solution, puis la suspension obtenue est mélangée avec le copolymère (a) dissous ou dispersé dans de l'eau et/ou dans un solvant organique.

5. Utilisation des peintures anticorrosives selon l'une quelconque des revendications 1 à 3 pour l'enduction de surfaces de fer ou d'acier ayant éventuellement subi un prétraitement chimique.